(19) Europäisches Patentamt / European Patent Office / Office européen des brevets

(11) **EP 4 481 008 A1**

(12) **EUROPEAN PATENT APPLICATION**

(43) Date of publication:
**25.12.2024 Bulletin 2024/52**

(21) Application number: **24183611.3**

(22) Date of filing: **21.06.2024**

(51) International Patent Classification (IPC):
**C09D 11/101** (2014.01)    **C09D 11/38** (2014.01)

(52) Cooperative Patent Classification (CPC):
**C09D 11/101; C09D 11/38**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **23.06.2023 JP 2023103177**

(71) Applicant: **Seiko Epson Corporation**
**Tokyo 160-8801 (JP)**

(72) Inventors:
• **FUJISAWA, Yusuke**
  **Suwa-shi, 392-8502 (JP)**
• **SAITO, Toru**
  **Suwa-shi, 392-8502 (JP)**

(74) Representative: **Lewis Silkin LLP**
**Arbor**
**255 Blackfriars Road**
**London SE1 9AX (GB)**

(54) **INK JET CLEAR INK COMPOSITION AND RECORDING METHOD**

(57) An ink jet clear ink composition includes a photoinitiator, a fluorescent whitening agent, and a polymerizable monomer, the photoinitiator includes ethyl phenyl(2,4,6-trimethylbenzoyl)phosphinate, the polymerizable monomer includes an aromatic ring-containing monomer and a hydroxy group-containing monomer, and the fluorescent whitening agent is present at a content of 0.2 percent by mass or more with respect to a total mass of the ink jet clear ink composition.

FIG. 1

EP 4 481 008 A1

**Description**

The present application is based on, and claims priority from JP Application Serial Number 2023-103177, filed June 23, 2023, the disclosure of which is hereby incorporated by reference herein in its entirety.

BACKGROUND

1. Technical Field

The present disclosure relates to an ink jet clear ink composition and a recording method.

2. Related Art

Since being able to record a highly fine image using a relatively simple apparatus, an ink jet recording method has been rapidly developed in various fields. Among the developments, various types of studies on curing property and the like have been carried out. For example, JP-A-2013-203873 has disclosed an ultraviolet curable clear ink composition which contains a polymerizable compound and a photopolymerization initiator, and in the ultraviolet curable clear ink composition, as the polymerizable compound, a vinyl ether group-containing (meth)acrylate and an urethane oligomer at a content of 5 to 25 percent by mass with respect to a total mass of the ink composition described above are contained.

Incidentally, in recent years, for example, by revision of environmental restrictions, radiation curable inks which use various types of organic compounds, such as polymerizable compounds and photopolymerization initiators, are required to employ safer components instead of using the components which have been used in the past. However, when the related components are simply replaced by alternative components, in many cases, a problem in that performance similar to that obtained using the related components is not obtained may arise. Accordingly, based on the assumption that the alternative components are to be employed, research and development of inks is required to adjust the remaining components of the composition so as to secure the performance similar to that obtained in the past.

SUMMARY

According to an aspect of the present disclosure, there is provided an ink jet clear ink composition comprising: a photoinitiator; a fluorescent whitening agent; and a polymerizable monomer. In the inkjet clear ink composition described above, the photoinitiator includes ethyl phenyl(2,4,6-trimethylbenzoyl)phosphinate, the polymerizable monomer includes an aromatic ring-containing monomer and a hydroxy group-containing monomer, and the fluorescent whitening agent is present at a content of 0.2 percent by mass or more with respect to a total mass of the inkjet clear ink composition.

BRIEF DESCRIPTION OF THE DRAWINGS

FIG. 1 is a schematic view of a recording apparatus used in this embodiment.
FIG. 2 is a table showing results of Examples.
FIG. 3 is a table showing results of Examples.
FIG. 4 is a table showing results of Comparative Examples.

DESCRIPTION OF EMBODIMENTS

Hereinafter, although embodiments of the present disclosure (hereinafter, each referred to as "this embodiment") will be described in detail, the present disclosure is not limited to the following embodiments and may be variously changed and/or modified without departing from the scope thereof.

1. INK JET CLEAR INK COMPOSITION

An ink jet clear ink composition (hereinafter, simply referred to as "clear ink composition" in some cases) of this embodiment includes a photoinitiator, a fluorescent whitening agent, and a polymerizable monomer. In the inkjet clear ink composition described above, the photoinitiator includes ethyl phenyl(2,4,6-trimethylbenzoyl)phosphinate, the polymerizable monomer includes an aromatic ring-containing monomer and a hydroxy group-containing monomer, and the fluorescent whitening agent is present at a content of 0.2 percent by mass or more with respect to a total mass of the ink jet clear ink composition.

Heretofore, as the photoinitiator, diphenyl-2,4,6-trimethylbenzoly phosphine oxide (hereinafter, also referred to as "TPO" in some cases) has been typically used. However, TPO is to be subject to environmental restrictions. Hence, in this embodiment, instead of TPO, a highly environmentally compatible ethyl phenyl(2,4,6-trimethylbenzoyl)phosphinate (hereinafter, also referred to as "TPO-L" in some cases) is used as the photoinitiator.

On the other hand, compared to the ink composition using TPO, an ink composition using TPO-L has still some room to improve its curing property. Accordingly, when the content of the TPO-L is increased in order to improve the curing property, a coating film formed from the ink composition is yellowed, and as a result, a problem in that in particular, in a transparent ink composition, such as a composition containing no colorant, the yellowing described above becomes conspicuous may arise.

Hence, in this embodiment, in order to improve the curing property while the yellowing of the coating film is suppressed, the fluorescent whitening agent is contained in the clear ink composition. Since the fluorescent whitening agent is contained, even when the content of TPO-L, which is the photoinitiator to cause the yellowing of the coating film, is decreased, a preferable curing property can be maintained. Furthermore, when being used in combination with the photoinitiator, the fluorescent whitening agent is believed to obtain a sensitization action which contributes to the curing property of the clear ink composition, and hence, when the clear ink composition contains the fluorescent whitening agent, while the yellowing of the coating film is suppressed, the curing property is believed to be further improved. However, the reason the curing property is improved while the yellowing of the coating film is suppressed is not limited thereto.

Since the ink composition contains the fluorescent whitening agent, although the curing property can be improved while the yellowing of the coating film is suppressed, a problem in that the fluorescent whitening agent is precipitated occurs in a low-temperature environment.

Accordingly, in this embodiment, in order to improve the solubility of the fluorescent whitening agent, the clear ink composition contains an aromatic ring-containing monomer. Since the aromatic ring-containing monomer has a high compatibility with the fluorescent whitening agent, when the clear ink composition contains the aromatic ring-containing monomer, even in a low-temperature environment, the fluorescent whitening agent is not precipitated, and as a result, low-temperature storage stability is believed to be improved. However, the reason the low-temperature storage stability is improved is not limited thereto.

Furthermore, in this embodiment, in order to improve the curing property, the clear ink composition contains a hydroxy group-containing monomer. Since the hydroxy groups included in the hydroxy group-containing monomer are tightly bonded to each other with hydrogen bonds therebetween, the hydroxy group-containing monomer is superior in terms of curing property. Accordingly, when the clear ink composition contains the hydroxy group-containing monomer, the curing property is believed to be further improved. However, the reason the curing property is improved is not limited thereto.

The clear ink composition has a viscosity at 25°C of preferably 3 to 30 mPa·s, more preferably 5 to 29 mPa·s, even more preferably 10 to 28 mPa·s, further preferably 15 to 25 mPa·s, even further preferably 18 to 22 mPa·s, and particularly preferably 19 to 21 mPa·s. Since the viscosity of the clear ink composition at 25°C is in the range described above, a clear ink composition suitable for an inkjet recording method tends to be obtained.

The viscosity of the clear ink composition at 25°C can be measured by a method performed in accordance with JIS Z 8803. In addition, the viscosity of the clear ink composition is not particularly limited and can be adjusted, for example, by changing the content of the photoinitiator, by changing the type and/or the content of the polymerizable monomer, and/or by adding a viscosity adjuster functioning as one of other components which will be described later.

Hereinafter, the components of the clear ink composition of this embodiment will be described in more detail.

1.1. COLORANT

In this embodiment, the clear ink composition indicates an ink composition containing no colorant or substantially containing no colorant. In this embodiment the "substantially containing no colorant" is not particularly limited, and for example, the colorant is present, with respect to the total mass of the clear ink composition, at a content of preferably 0.50 percent by mass or less, more preferably 0.25 percent by mass or less, even more preferably 0.10 percent by mass or less, further preferably 0.05 percent by mass or less, and even further preferably 0.01 percent by mass or less. In addition, although not particularly limited, for example, the content described above is preferably 0.001 to 0.500 percent by mass, more preferably 0.001 to 0.250 percent by mass, even more preferably 0.001 to 0.100 percent by mass, further preferably 0.001 to 0.050 percent by mass, and even further preferably 0.001 to 0.010 percent by mass.

As the colorant, a dye and/or a pigment may be mentioned.

The dye is not particularly limited, and for example, an acidic dye, a direct dye, a reactive dye, or a basic dye may be mentioned. As a concrete example of the dye, for example, there may be mentioned C.I. Acid Yellow 17, 23, 42, 44, 79, or 142; C.I. Acid Red 52, 80, 82, 249, 254, or 289; C.I. Acid Blue 9, 45, or 249; C.I. Acid Black 1, 2, 24, or 94; C.I. Food Black 1 or 2; C.I. Direct Yellow 1, 12, 24, 33, 50, 55, 58, 86, 132, 142, 144, or 173; C.I. Direct Red 1, 4, 9, 80, 81, 225, or 227; C.I. Direct Blue 1, 2, 15, 71, 86, 87, 98, 165, 199, or 202; C.I. Direct Black 19, 38, 51, 71, 154, 168, 171, or 195; C.I. Reactive Red 14, 32, 55, 79, or 249; or C.I. Reactive Black 3, 4, or 35. Those dyes mentioned above may be used alone, or at least two types thereof may be used in combination.

Although the pigment is not particularly limited, for example, an inorganic pigment or an organic pigment may be mentioned. The inorganic pigment is not particularly limited, and for example, there may be mentioned a carbon black, such as a furnace black, a lamp black, an acetylene black, or a channel black; an iron oxide, or a titanium oxide. As the organic pigment, there may be mentioned an azo pigment, such as an insoluble azo pigment, a condensed azo pigment, an azo lake, or a chelate azo pigment; a polycyclic pigment, such as a phthalocyanine pigment, a perylene pigment, a perinone pigment, an anthraquinone pigment, a quinacridone pigment, a dioxane pigment, a thioindigo pigment, an isoindolinone pigment, or a quinophthalone pigment; a dye chelate, a dye lake, a nitro pigment, a nitroso pigment, an aniline black, or a daylight fluorescent pigment. Those pigments mentioned above may be used alone, or at least two types thereof may be used in combination.

The carbon black is not particularly limited, and for example, there may be mentioned No.2300, No.900, MCF88, No.33, No.40, No.45, No.52, MA7, MA8, MA100, or No.2200B (manufactured by Mitsubishi Chemical Corporation); Raven 5750, Raven 5250, Raven 5000, Raven 3500, Raven 1255, or Raven 700 (manufactured by Carbon Columbia); Rega1 400R, Rega1 330R, Rega1 660R, Mogul L, Monarch 700, Monarch 800, Monarch 880, Monarch 900, Monarch 1000, Monarch 1100, Monarch 1300, or Monarch 1400 (manufactured by CABOT JAPAN K.K.); or Color Black FW1, Color Black FW2, Color Black FW2V, Color Black FW18, Color Black FW200, Color Black S150, Color Black S160, Color Black S170, Printex 35, Printex U, Printex V, Printex 140U, Special Black 6, Special Black 5, Special Black 4A, or Special Black 4 (manufactured by Degussa).

A white pigment is not particularly limited, and for example, C.I. Pigment White 6, 18, or 21 may be mentioned.

A Yellow pigment is not particularly limited, and for example, there may be mentioned C.I. Pigment Yellow 1, 2, 3, 4, 5, 6, 7, 10, 11, 12, 13, 14, 16, 17, 24, 34, 35, 37, 53, 55, 65, 73, 74, 75, 81, 83, 93, 94, 95, 97, 98, 99, 108, 109, 110, 113, 114, 117, 120, 124, 128, 129, 133, 138, 139, 147, 151, 153, 154, 155, 167, 172, or 180.

A magenta pigment is not particularly limited, and for example, there may be mentioned C.I. Pigment Red 1, 2, 3, 4, 5, 6, 7, 8, 9, 10, 11, 12, 14, 15, 16, 17, 18, 19, 21, 22, 23, 30, 31, 32, 37, 38, 40, 41, 42, 48(Ca), 48(Mn), 57(Ca), 57:1, 88, 112, 114, 122, 123, 144, 146, 149, 150, 166, 168, 170, 171, 175, 176, 177, 178, 179, 184, 185, 187, 202, 209, 219, 224, or 245; or C.I. Pigment Violet 19, 23, 32, 33, 36, 38, 43, or 50.

A cyan pigment is not particularly limited, and for example, there may be mentioned C.I. Pigment Blue 1, 2, 3, 15, 15:1, 15:2, 15:3, 15:34, 15:4, 16, 18, 22, 25, 60, 65, or 66; or C.I. Vat Blue 4 or 60.

In addition, pigments other than the magenta, the cyan, and the yellow pigments are not particularly limited, and for example, there may be mentioned C.I. Pigment Green 7 or 10; C.I. Pigment Brown 3, 5, 25, or 26; or C.I. Pigment Orange 1, 2, 5, 7, 13, 14, 15, 16, 24, 34, 36, 38, 40, 43, or 63.

The pigment may be dispersed by a dispersant. The dispersant to disperse the pigment is not particularly limited, and for example, there may be mentioned a dispersant containing, as a primary component, at least one selected from the group consisting of a polyoxyalkylene polyalkylene polyamine, a vinyl-based polymer and its copolymer, an acrylic-based resin and its copolymer, a polyester, a polyamide, a polyimide, a polyurethane, an amino-based polymer, a silicon-containing polymer, a sulfur-containing polymer, a fluorine-containing polymer, and an epoxy resin. As a commercial product of the dispersant, for example, there may be mentioned Ajispur Series (manufactured by Ajinomoto Fine-Techno Co., Inc.), Solsperse Series (such as Solsperse 36000 (acid value: 45) or Solsperse 32000 (acid value: 35)) (available from Avecia Co.)), DISPERBYK Series (such as DISPERBYK 168 or 180, manufactured by BYK Chemie), or Disparlon Series (manufactured by Kusumoto Chemicals, Ltd.). Those dispersants may be used alone, or at least two types thereof may be used in combination.

## 1.2. PHOTOINITIATOR

The clear ink composition of this embodiment contains a photoinitiator. In the case in which the clear ink composition contains a photoinitiator, when being irradiated with radioactive rays, the photoinitiator generates active species (initiating species), such as radicals, acids, or bases, and a polymerization reaction of the polymerizable monomer which will be described later is promoted by the function of the initiating species.

Although the photoinitiator is not particularly limited, for example, there may be mentioned an aromatic ketone, a hydroxy ketone, an acylphosphine compound, an aromatic onium salt compound, an organic peroxide, a thio compound such as a thioxantone-based compound, a hexaaryl biimidazole compound, a ketoxime ester compound, a borate compound, an azinium compound, a metallocene compound, an active ester compound, a compound having a carbon-halogen bond, or an alkylamine compound. Those photoinitiators may be used alone, or at least two types thereof may be used in combination.

In addition, the clear ink composition of this embodiment contains, as the photoinitiator, ethyl phenyl(2,4,6-trimethylbenzoyl)phosphinate (hereinafter, also referred to as "TPO-L" in some cases) which is an acylphosphine compound. Since the clear ink composition contains TPO-L, a clear ink composition having a high environmental compatibility can be obtained.

The photoinitiator is present, with respect to the total mass of the clear ink composition, at a content of preferably 0 to 15.0 percent by mass or less, more preferably 0 to 12.0 percent by mass or less, even more preferably 1.0 to 15.0 percent by mass or less, further preferably 2.0 to 12.0 percent by mass or less, even further preferably 3.0 to 11.0 percent by mass or less, particularly preferably 4.0 to 10.5 percent by mass or less, and more particularly preferably 5.0 to 10.0 percent by mass or less. Since the content of the photoinitiator is in the range described above, the yellowing of the coating film tends to be further suppressed.

TPO-L is present with respect to the total mass of the clear ink composition at a content of preferably 1.0 to 15.0 percent by mass, more preferably 1.5 to 12.5 percent by mass, even more preferably 2.0 to 10.0 percent by mass, further preferably 2.0 to 8.0 percent by mass, and particularly preferably 2.5 to 7.5 percent by mass. Since the content of TPO-L is in the range described above, a clear ink composition having a high environmental compatibility is formed, and in addition, while the yellowing of the coating film is further suppressed, the curing property tends to be further improved.

The content of TPO-L with respect to a total mass of the photoinitiator is preferably 20.0 to 80.0 percent by mass, more preferably 30.0 to 70.0 percent by mass, even more preferably 35.0 to 65.0 percent by mass, further preferably 37.5 to 62.5 percent by mass, and even further preferably 40.0 to 60.0 percent by mass. Since the content of TPO-L is in the range described above, a clear ink composition having a high environmental compatibility is formed, and in addition, while the yellowing of the coating film is further suppressed, the curing property tends to be further improved.

The photoinitiator of this embodiment may include at least one of other photoinitiators besides TPO-L. The other photoinitiators besides TPO-L are not particularly limited, and for example, phenyl bis(2,4,6-trimethylbenzoyl)phosphine oxide may be mentioned.

Although not particularly limited, a content of the other photoinitiators besides TPO-L with respect to the total mass of the clear ink composition is, for example, preferably 1.0 to 15.0 percent by mass, more preferably 2.0 to 12.5 percent by mass, even more preferably 3.0 to 10.0 percent by mass, and further preferably 3.5 to 8.5 percent by mass.

Although not particularly limited, a content of the other photoinitiators besides TPO-L is present with respect to the total mass of the photoinitiator is, for example, preferably 10.0 to 70.0 percent by mass, more preferably 15.0 to 60.0 percent by mass, and further preferably 20.0 to 55.0 percent by mass.

The photoinitiator of this embodiment preferably or substantially preferably contains no diphenyl-2,4,6-trimethylbenzoylphosphine oxide (TPO). The "substantially contains no TPO" is not particularly limited, and for example, the content of TPO with respect to the total mass of the clear ink composition is preferably 0.50 percent by mass or less, more preferably 0.25 percent by mass or less, even more preferably 0.10 percent by mass or less, further preferably 0.05 percent by mass or less, and even further preferably 0.01 percent by mass or less. In addition, although not particularly limited, for example, the content described above is preferably 0.001 to 0.500 percent by mass, more preferably 0.001 to 0.250 percent by mass, even more preferably 0.001 to 0.100 percent by mass, further preferably 0.001 to 0.050 percent by mass, and even further preferably 0.001 to 0.010 percent by mass.

## 1.3. FLUORESCENT WHITENING AGENT

The clear ink composition of this embodiment contains a fluorescent whitening agent. The fluorescent whitening agent absorbs ultraviolet rays and emits pale fluorescence. In addition, when the fluorescent whitening agent is used together with the photoinitiator, a sensitization action is obtained. Hence, when the clear ink composition of this embodiment contains the fluorescent whitening agent, while the yellowing of the coating film is further suppressed, the curing property tends to be further improved.

In addition, as the photoinitiator of the present disclosure classified in the fluorescent whitening agent, for example, there may be mentioned a naphthalene benzoxazolyl derivative, a thiophene benzoxazolyl derivative, a stilbene benzoxazolyl derivative, a coumarin derivative, a styrene biphenyl derivative, a pyrazolone derivative, a stilbene derivative, a styryl derivative of benzene and biphenyl, a bis(benzazole-2-yl) derivative, a carbostyril, a naphthalimide, a dibenzothiophene-5,5'-dioxide derivative, a pyrene derivative, or a pyridotriazole..

The fluorescent whitening agent is not particularly limited, and for example, there may be mentioned 1,4-bis(2-benzoxazolyl)naphthalene or 2,5-bis(5-tert-butyl-2-benzoxazolyl)thiophene.

The fluorescent whitening agent is present, with respect to the total mass of the clear ink composition, at a content of preferably 0.20 percent by mass or more, more preferably 0.20 to 5.00 percent by mass, even more preferably 0.25 to 4.00 percent by mass, further preferably 0.30 to 3.00 percent by mass, even further preferably 0.35 to 2.00 percent by mass, and particularly preferably 0.35 to 1.00 percent by mass. Since the content of the fluorescent whitening agent is in the range described above, while the yellowing of the coating film is further suppressed, the curing property tends to be further improved.

## 1.4. SENSITIZER

The clear ink composition of this embodiment may also contain a sensitizer. When being irradiated with radioactive rays, since the sensitizer is placed in an excited state by absorption of radioactive rays and is then brought into contact with the photoinitiator, decomposition of the photoinitiator is promoted, and the curing property of the clear ink composition can be further improved.

The sensitizer is not particularly limited, and for example, there may be mentioned an amine compound (such as an aliphatic amine, an amine having an aromatic ring, piperidine, a reaction product between an epoxy resin and an amine, or triethanolamine triacrylate), an urea compound (such as allylthiourea or o-tolylthiourea), a sulfur compound (such as 2-methyl-[4-(methylthio) phenyl]-2-morpholino-1-propane, sodium diethyl dithiophosphate, or a soluble salt of an aromatic sulfinic acid), a nitrile-based compound (such as N,N-diethyl-p-aminobenzonitrile), a phosphorus compound (such as tri-n-butylphosphine or sodium diethyl dithiophosphide), a nitrogen compound (such as Michler's ketone, an N-nitrosohydroxylamine derivative, an oxazolidine compound, a tetrahydro-1,3-oxadine compound, or a condensate of a diamine with formaldehyde or acetaldehyde), or a chloride compound (such as carbon tetrachloride or hexachloroethane). Those sensitizers may be used alone, or at least two types thereof may be used in combination.

Although not particularly limited, a content of the sensitizer with respect to the total mass of the clear ink composition is, for example, preferably 0.1 to 5.0 percent by mass and more preferably 0.5 to 2.5 percent by mass. In addition, the sensitizer may be allowed not to be contained.

## 1.5. POLYMERIZABLE MONOMER

The clear ink composition of this embodiment contains a polymerizable monomer. The polymerizable monomer is not particularly limited and is, for example, a photopolymerizable compound to be solidified by polymerization when being irradiated with light, such as ultraviolet rays. In view of the number of polymerizable double bonds, as the polymerizable monomer, for example, a monofunctional monomer, a difunctional monomer, and/or a polyfunctional monomer having at least three functional groups may be mentioned, and in view of the functional group other than the polymerizable double bond, a hydroxy group-containing monomer and/or an aromatic ring-containing monomer may be mentioned. In addition, the "monofunctional", the "difunctional", and the "trifunctional" groups are each regarded to indicate the number of functional groups of the polymerizable double bonds. The polymerizable monomers may be used alone, or at least two types thereof may be used in combination.

The polymerizable monomer is present, with respect to the total mass of the clear ink composition, at a content of preferably 60.0 to 95.0 percent by mass, more preferably 62.5 to 92.5 percent by mass, even more preferably 65.0 to 90.0 percent by mass, and further preferably 67.5 to 87.5 percent by mass. Since the content of the polymerizable monomer is in the range described above, the curing property tends to be further improved.

### 1.5.1. MONOFUNCTIONAL MONOMER

The monofunctional monomer is not particularly limited, and for example, there may be mentioned (meth) acryloyl morpholine, benzyl(meth)acrylate, isoamyl(meth)acrylate, stearyl(meth)acrylate, lauryl(meth) acrylate, octyl(meth)acrylate, decyl(meth)acrylate, isomyristyl(meth)acrylate, isostearyl(meth)acrylate, 2-ethylhexyl-diglycol (meth)acrylate, 2-hydroxybutyl (meth)acrylate, 4-hydroxybutyl (meth)acrylate, butoxyethyl (meth)acrylate, ethoxy diethylene glycol (meth) acrylate, methoxy diethylene glycol (meth)acrylate, a methoxy polyethylene glycol (meth)acrylate, methoxy propylene glycol (meth)acrylate, phenoxyethyl (meth) acrylate, tetrahydrofurfuryl (meth)acrylate, isobornyl (meth)acrylate, 2-hdyroxyehtyl (meth)acrylate, 2-hdyroxypropyl (meth)acrylate, 2-hdyroxy-3-phenoxypropyl (meth)acrylate, a lactone-modified flexible (meth)acrylate, t-butylcyclohexyl (meth)acrylate, dicyclopentanyl (meth)acrylate, cyclic trimethylolpropane formal (meth) acrylate, dicyclopentenyloxyethyl (meth)acrylate, 1,4-cyclohexane dimethanol mono(meth)acrylate, or vinyl methyl oxazolidinone. Among those mentioned above, 2-hdyroxy-3-phenoxypropyl (meth)acrylate is preferable. Those monofunctional monomers may be used alone, or at least two types thereof may be used in combination.

The monofunctional monomer is present, with respect to the total mass of the clear ink composition, at a content of preferably 25.0 to 70.0 percent by mass, more preferably 27.5 to 65.0 percent by mass, and further preferably 30.0 to 60.0 percent by mass. Since the content of the monofunctional monomer is in the range described above, the curing property tends to be made more excellent.

The monofunctional monomer is present, with respect to a total mass of the polymerizable monomer, at a content of preferably 25.0 to 70.0 percent by mass, more preferably 27.5 to 67.5 percent by mass, and further preferably 30.0 to 65.0 percent by mass. Since the content of the monofunctional monomer is in the range described above, the curing property tends to be made more excellent.

### 1.5.2. DIFUNCTIONAL MONOMER

The difunctional monomer is not particularly limited, and for example, there may be mentioned diethylene glycol di(meth)acrylate, dipropylene glycol di(meth) acrylate, 2-(2-vinyloxyethoxy)ethyl acrylate, triethylene glycol di(meth)acrylate, tetraethylene glycol di(meth)acrylate, a polyethylene glycol di(meth)acrylate, tripropylene glycol di(meth)acrylate, a polypropylene glycol di(meth)acrylate, 1,4-butanediol di(meth)acrylate, 1,6-hexanediol di(meth)acrylate, 1,9-nonanediol di(meth)acrylate, neopentyl glycol di(meth)acrylate, dimethylol tricyclodecane di(meth)acrylate, a bisphenol A-EO (ethylene oxide) adduct di(meth)acrylate, a bisphenol A-PO (propylene oxide) adduct di(meth)acrylate, neopentyl glycol hydroxypivalate di(meth)acrylate, or a polytetramethylene glycol di(meth)acrylate. Those difunctional monomers may be used alone, or at least two types thereof may be used in combination.

The difunctional monomer is present, with respect to the total mass of the clear ink composition, at a content of preferably 20.0 to 65.0 percent by mass, more preferably 25.0 to 60.0 percent by mass, and further preferably 30.0 to 55.0 percent by mass. Since the content of the difunctional monomer is in the range described above, the viscosity characteristics and the curing property tend to be made more excellent.

The difunctional monomer is present, with respect to the total mass of the polymerizable monomer, at a content of preferably 25.0 to 70.0 percent by mass, more preferably 30.0 to 65.0 percent by mass, and further preferably 35.0 to 60.0 percent by mass. Since the content of the difunctional monomer is in the range described above, the viscosity characteristics and the curing property tend to be made more excellent.

### 1.5.3. POLYFUNCTIONAL MONOMER

The polyfunctional monomer having at least three functional groups is not particularly limited, and for example, there may be mentioned trimethylolpropane tri(meth)acrylate, an EO-modified trimethylolpropane tri(meth)acrylate, pentaerythritol tri(meth)acrylate, pentaerythritol tetra(meth)acrylate, dipentaerythritol hexa(meth)acrylate, ditrimethylolpropane tetra(meth)acrylate, glycerin propoxy tri(meth)acrylate, a caprolactone-modified trimethylolpropane tri(meth)acrylate, pentaerythritolethoxy tetra(meth)acrylate, or a caprolactam-modified dipentaerythritol hexa(meth)acrylate. Those polyfunctional monomers may be used alone, or at least two types thereof may be used in combination.

Although not particularly limited, a content of the polyfunctional monomer with respect to the total mass of the clear ink composition is, for example, preferably 1.0 to 15.0 percent by mass, more preferably 2.0 to 12.5 percent by mass, and further preferably 3.0 to 10.0 percent by mass. In addition, the clear ink composition may be allowed not to contain the polyfunctional monomer.

Although not particularly limited, a content of the polyfunctional monomer with respect to the total mass of the polymerizable monomer is, for example, preferably 2.0 to 15.0 percent by mass, more preferably 3.0 to 12.5 percent by mass, and further preferably 4.0 to 10.0 percent by mass. In addition, the clear ink composition may be allowed not to contain the polyfunctional monomer.

### 1.5.4. HYDROXY GROUP-CONTAINING MONOMER

The clear ink composition of this embodiment contains a hydroxy group-containing monomer having a hydroxy group. The hydroxy group-containing monomer may be any one of the monofunctional monomer, the difunctional monomer, and the polyfunctional monomer described above. Since the clear ink composition contains the hydroxy group-containing monomer, the curing property tends to be further improved.

The hydroxy group-containing monomer is not particularly limited as long as having a hydroxy group, and for example, among the monomers including the monofunctional monomer, the difunctional monomer, and the polyfunctional monomer described above, a monomer having a hydroxy group may be mentioned. In particular, in order to further improve the curing property, at least one selected from the group consisting of 2-hydroxy-3-phenoxypropyl (meth)acrylate, 4-hydroxybutyl (meth)acrylate, and 1,4-cyclohexane dimethanol mono(meth)acrylate is preferable.

The hydroxy group-containing monomer is present, with respect to the total mass of the clear ink composition, at a content of preferably 2.0 to 20.0 percent by mass, more preferably 3.0 to 17.5 percent by mass, even more preferably 4.0 to 15.0 percent by mass, and further preferably 5.0 to 14.5 percent by mass. Since the content of the hydroxy group-containing monomers is in the range described above, the curing property tends to be further improved.

The hydroxy group-containing monomer is present, with respect to the total mass of the polymerizable monomer, at a content of preferably 4.0 to 30.0 percent by mass, more preferably 5.0 to 20.0 percent by mass, and further preferably 6.0 to 15.0 percent by mass. Since the content of the hydroxy group-containing monomers is in the range described above, the curing property tends to be further improved.

### 1.5.5. AROMATIC RING-CONTAINING MONOMER

The clear ink composition of this embodiment contains an aromatic ring-containing monomer having an aromatic ring. The aromatic ring-containing monomer may be any one of the monofunctional monomer, the difunctional monomer, and the polyfunctional monomer described above. Since the clear ink composition contains the aromatic ring-containing monomer, the fluorescent whitening agent is not precipitated even in a low-temperature environment, and the low-temperature storage stability tends to be further improved.

The aromatic ring-containing monomer is not particularly limited as long as having an aromatic ring, and for example, among the monomers including the monofunctional monomer, the difunctional monomer, and the polyfunctional monomer described above, a monomer having an aromatic ring may be mentioned. In particular, in order to further improve the low-temperature storage stability, at least one selected from the group consisting of phenoxyethyl (meth)acrylate, benzyl (meth)acrylate, and 2-hdyroxy-3-phenoxypropyl (meth)acrylate is preferable.

The clear ink composition of this embodiment contains phenoxyethyl (meth)acrylate at a content of preferably 40 percent by mass or less, more preferably 30 percent by mass or less, even more preferably 20 percent by mass or less, further preferably 10 percent by mass or less, and even further preferably 5 percent by mass or less. In addition, the phenoxyethyl (meth)acrylate may be allowed not to be contained. When the clear ink composition of this embodiment contains phenoxyethyl (meth)acrylate at a content of from 0 to 40 percent by mass, the yellowing of the coating film of the ink jet ink composition is prevented, the viscosity of the ink jet ink composition is decreased, and ejection stability tends to be made excellent.

The aromatic ring-containing monomer is present, with respect to the total mass of the clear ink composition, at a content of preferably 20.0 percent by mass or more, more preferably 30.0 percent by mass or more, even more preferably 31.5 percent by mass or more, further preferably 20.0 to 60.0 percent by mass, even further preferably 25.0 to 55.0 percent by mass, particularly preferably 30.0 to 50.0 percent by mass, and even particularly preferably 35.0 to 47.5 percent by mass. Since the content of the aromatic ring-containing monomer is in the range described above, the low-temperature storage stability tends to be further improved.

The aromatic ring-containing monomer is present, with respect to the total mass of the polymerizable monomer, at a content of preferably 35.0 to 70.0 percent by mass, more preferably 37.5 to 60.0 percent by mass, and further preferably 40.0 to 57.5 percent by mass or more. Since the content of the aromatic ring-containing monomer is in the range described above, the low-temperature storage stability tends to be further improved.

### 1.5.6. AROMATIC RING- AND HYDROXY GROUP-CONTAINING MONOMER

The clear ink composition of this embodiment preferably contains an aromatic ring- and hydroxy group-containing monomer having both an aromatic ring and a hydroxy group. The aromatic ring- and hydroxy group-containing monomer may be any one of the monofunctional monomer, the difunctional monomer, and the polyfunctional monomer described above. Since the clear ink composition contains the aromatic ring- and hydroxy group-containing monomer, the degree of freedom of designing the clear ink composition is improved, and physical properties (such as viscosity characteristics) of the clear ink composition tend to be improved.

The aromatic ring- and hydroxy group-containing monomer is the hydroxy group-containing monomer described above and is also the aromatic ring-containing monomer described above. The aromatic ring- and hydroxy group-containing monomer is not particularly limited as long as having an aromatic ring and a hydroxy group, and for example, 2-hydroxy-3-phenoxypropyl (meth)acrylate may be mentioned.

Although not particularly limited, a content of the aromatic ring- and hydroxy group-containing monomer, with respect to the total mass of the clear ink composition, is for example, preferably 1.0 to 20.0 percent by mass, more preferably 1.5 to 17.5 percent by mass, even more preferably 2.0 to 15.0 percent by mass, further preferably 2.5 to 12.5 percent by mass, and even further preferably 3.0 to 10.0 percent by mass.

Although not particularly limited, a content of the aromatic ring- and hydroxy group-containing monomer, with respect to the total mass of the polymerizable monomer, is for example, preferably 1.0 to 20.0 percent by mass, more preferably 1.5 to 17.5 percent by mass, even more preferably 2.0 to 15.0 percent by mass, further preferably 2.5 to 12.5 percent by mass, and even further preferably 3.0 to 10.0 percent by mass.

### 1.6. OLIGOMER

The clear ink composition of this embodiment may contain an oligomer. The oligomer of this embodiment is a multimer, such as a dimer or a trimer, containing a polymerizable compound as a constituent component and is a compound having at least one polymerizable functional group. In addition, in this case, the polymerizable compound is not limited to the monofunctional monomer, the difunctional monomer, and the polyfunctional monomer described above.

The oligomer as described above is not particularly limited, and for example, an urethane acrylate oligomer having an urethane unit as a repeating structure, a polyester acrylate oligomer having an ester unit as a repeating structure, or an epoxy acrylate oligomer having an epoxy unit as a repeating structure may be mentioned.

Among those mentioned above, the urethane acrylate oligomer is preferable, an aliphatic urethane acrylate oligomer and an aromatic urethane oligomer are more preferable, and an aliphatic urethane acrylate oligomer is further preferable. In addition, as the urethane acrylate oligomer, an urethane acrylate oligomer having four functional groups or less is preferable, and an urethane acrylate oligomer having two functional groups is more preferable. In addition, the number of functional groups indicates the number of (meth)acryloyl groups. Since containing the urethane acrylate oligomer, the clear ink composition tends to have excellent viscosity characteristics.

The urethane acrylate oligomer is not particularly limited, and for example, a polyether-based urethane acrylate oligomer having an urethane bond and an ether bond, a polyester-based urethane acrylate oligomer having an urethane bond and an ester bond, or a polycarbonate-based urethane acrylate oligomer having an urethane bond and a carbonate bond may be mentioned.

A commercial product of the urethane oligomer is not particularly limited, and for example, there may be mentioned an aliphatic urethane acrylate oligomer, such as CN929 (polyester-based aliphatic urethane acrylate, number of functional groups: 3), CN962 (polyester-based aliphatic urethane acrylate, number of functional groups: 2), CN963 (polyester-based aliphatic urethane acrylate, number of functional groups: 2), CN964 (polyester-based aliphatic urethane acrylate, number of functional groups: 2), CN965 (polyester-based aliphatic urethane acrylate, number of functional groups: 2), CN968 (polyester-based aliphatic urethane acrylate, number of functional groups: 6), CN980 (polyether-based aliphatic urethane acrylate, number of functional groups: 2), CN981 (polyester-based aliphatic urethane acrylate, number of functional groups: 2), CN982 (polyester-based aliphatic urethane acrylate, number of functional groups: 2), CN983 (polyester-based aliphatic urethane acrylate, number of functional groups: 2), CN996 (polyether-based aliphatic urethane acrylate, number of functional groups: 2), CN9001 (polyester-based aliphatic urethane acrylate, number of functional groups: 2), CN9002 (polyester-based aliphatic urethane acrylate, number of functional groups: 2), CN9788 (polyester-based aliphatic urethane acrylate, number of functional groups: 2), or CN9893 (polyether-based aliphatic urethane acrylate, number of functional groups: 2) (trade name, each manufactured by Sartomer Company), EBECRYL 230 (number of functional groups: 2), 270 (number of functional groups: 2), 5129 (number of functional groups: 6), 8210 (number of functional groups: 4), 8301 (number of functional groups: 6), 8311 (number of functional groups: 3), 8402 (number of functional groups: 2), 8405 (number of functional groups: 4), 8701 (number of functional groups: 3), 8804 (number of functional groups: 2), 8807 (number of functional groups: 2), 9260 (number of functional groups: 3), or 9270 (number of functional groups: 2), or KRM 8200 (number of functional groups: 6), 8296 (number of functional groups: 3), or 8452 (number of functional groups: 10) (trade name, each manufactured by DAICEL-CYTEC Company Ltd.); or an aromatic urethane acrylate oligomer, such as CN971 (polyester-based aromatic urethane acrylate, number of functional groups: 3), CN972 (polyester-based aromatic urethane acrylate, number of functional groups: 3), CN975 (polyester-based aromatic urethane acrylate, number of functional groups: 6), CN978 (polyester-based aromatic urethane acrylate, number of functional groups: 2), CN9782 (polyester-based aromatic urethane acrylate, number of functional groups: 2), or CN9783 (polyester-based aromatic urethane acrylate, number of functional groups: 2) (trade name, manufactured by Sartomer Company), or EBECRYL 210 (number of functional groups: 2) or 220 (number of functional groups: 6) (trade name, manufactured by DAICEL-CYTEC Company Ltd.).

Although not particularly limited, a content of the oligomer with respect to the total mass of the clear ink composition is, for example, preferably 1.0 to 12.0 percent by mass, more preferably 2.0 to 11.0 percent by mass, and further preferably 3.0 to 10.0 percent by mass.

### 1.7. SURFACTANT

The surfactant is not particularly limited, and for example, an acetylene glycol-based surfactant, a silicone-based surfactant, or a fluorine-based surfactant may be mentioned, and in order to more effectively and reliably achieve the operational effect of the present disclosure, a silicone-based surfactant is preferable.

The silicone-based surfactant is not particularly limited, and for example, BYK-UV3500, UV3570, or BYK350 (trade name, manufactured by BYK Japan KK) may be mentioned.

Although not particularly limited, a content of the surfactant with respect to the total mass of the clear ink composition is, for example, 0.1 to 1.0 percent by mass.

### 1.8. POLYMERIZATION INHIBITOR

A polymerization inhibitor is not particularly limited, and for example, there may be mentioned a hydroquinone, such as hydroquinone, hydroquinone monomethyl ether (MEHQ), 1-o-2,3,5-trimethylhydroquinone, or 2-tert-butylhydroquinone; a catechol, such as catechol, 4-methylcatechol, or 4-tert-butylcatechol; a phenol, such as phenol, butyl hydroxy toluene, butyl hydroxy anisole, p-methoxy phenol, cresol, pyrogallol, 3,5-di-t-butyl-4-hydroxy toluene, 2,2'-methylene bis(4-methyl-6-t-butylphenol), 2,2'-methylene bis(4-ethyl-6-butylphenol), or 4,4'-thio-bis(3-methyl-6-t-butylphenol); or a hindered amine represented by a compound having a 2,2,6,6-tetramethylpyperidine-N-oxyl skeleton, such as 4-hydroxy-2,2,6,6-tetramethylpyperidinyl-1-oxyl, a compound having a 2,2,6,6-tetramethylpyperidine skeleton, a compound having a 2,2,6,6-tetramethylpyperidine-N-alkyl skeleton, or a compound having a 2,2,6,6-tetramethylpyperidine-N-acyl skeleton. Those polymerization inhibitors may be used alone, or at least two types thereof may be used in combination.

Although not particularly limited, a content of the polymerization inhibitor with respect to the total mass of the clear ink composition is, for example, 0.1 to 1.0 percent by mass.

### 1.9. OTHER COMPONENTS

Besides the components described above, the clear ink composition of this embodiment may also contain known other components which may be used for related clear ink compositions. The above other components are not particularly limited, and for example, there may be mentioned a slipping agent, a solubilizing agent, a viscosity adjuster, a pH adjuster, an antioxidant, an antiseptic agent, and/or a corrosion inhibitor. Those other components may be used alone, or at least two types thereof may be used in combination.

### 2. METHOD FOR MANUFACTURING INK JET CLEAR INK COMPOSITION

A method for manufacturing the ink jet clear ink composition of this embodiment is not particularly limited, and for example, the components described above may be simultaneously or sequentially charged in a mixing tank and then may be mixed together.

### 3. RECORDING MEDIUM

A recording medium used for recording by the clear ink composition of this embodiment is not particularly limited, and for example, an absorbing recording medium, a low-absorbing recording medium, or a non-absorbing recording medium may be mentioned.

The absorbing recording medium is not particularly limited, and for example, there may be mentioned regular paper such as electrophotographic paper having a high ink permeability; ink jet paper (ink jet exclusive paper having an ink absorbing layer which is formed from silica or alumina particles or a hydrophilic polymer, such as a poly(vinyl alcohol) (PVA) or a poly(vinyl pyrrolidone) (PVP)); or a cloth.

The low-absorbing recording medium is not particularly limited, and for example, there may be mentioned art paper, coated paper, or cast paper which has a relatively low ink permeability and which is used for general offset printing.

The non-absorbing recording medium is not particularly limited, and as the recording medium described above, for example, there may be mentioned a film or a plate formed from a plastic, such as a poly(vinyl chloride), a polyethylene, a polypropylene, a polyethylene terephthalate) (PET), a polycarbonate, a polystyrene, or a polyurethane; a plate formed from a metal, such as iron, silver, copper, or aluminum; a metal plate or a plastic-made film manufactured by deposition of at least one of the metals mentioned above; a plate formed from an alloy, such as stainless steel or brass; or a film formed of a plastic adhered (coated) to a substrate formed from paper, the plastic being at least one selected from the group consisting of a poly(vinyl chloride), a polyethylene, a polypropylene, a polyethylene terephthalate) (PET), a polycarbonate, a polystyrene, and a polyurethane.

## 4. INKJET RECORDING METHOD

An inkjet recording method (hereinafter, simply referred to as "recording method" in some cases) of this embodiment includes an ink adhesion step of ejecting the clear ink composition of this embodiment from an ink jet head so as to be adhered to a recording medium and an irradiation step of irradiating the clear ink composition adhered to the recording medium with radioactive rays, and if needed, the recording method described above may also include other steps, such as a transport step of transporting the recording medium.

### 4.1. INK ADHESION STEP

In the ink adhesion step, the clear ink composition of this embodiment is ejected from the inkjet head and is adhered to the recording medium. In more particular, a pressure generator provided in the ink jet head is driven, and the clear ink composition filled in the pressure generator in the ink jet head is ejected from nozzles.

As the ink jet head used in the ink adhesion step, a line head to perform recording by a line method and a serial head to perform recording by a serial method may be mentioned.

In the line method using a line head, for example, an ink jet head having a width not less than a recording width of the recording medium is fixed in a recording apparatus. In addition, the recording medium and the ink jet head are relatively transferred in a sub-scanning direction

(transport direction of the recording medium, that is, the direction orthogonal to the width direction of the recording medium), and in conjunction with this transfer, ink droplets are ejected from the nozzles of the ink jet head, so that an image is recorded on the recording medium.

In the serial method using a serial head, for example, the ink jet head is mounted on a carriage movable in the width direction of the recording medium. In addition, the carriage is transferred along a main scanning direction (width direction of the recording medium), and in conjunction with this transfer, ink droplets are ejected from the nozzles of the ink jet head, so that an image is recorded on the recording medium.

### 4.2. IRRADIATION STEP

In the irradiation step, radioactive rays are irradiated to the clear ink composition adhered to the recording medium. When the radioactive rays are irradiated, since the polymerization reaction of the monomer is initiated, the composition is cured, so that the coating film is formed. In the case described above, when the photoinitiator is present, active species (initiating species), such as radicals, acids, or bases, are generated, and the polymerization reaction of the monomer is promoted by the function of the initiating species described above.

In the case described above, as the radioactive rays, for example, ultraviolet rays, infrared rays, visible light rays, and X-rays may be mentioned. The radioactive rays are irradiated to the composition by a radiation source provided downstream of the ink jet head. The radiation source is not particularly limited, and for example, an UV-LED may be mentioned. Since the radiation source as described above is used, reduction in size and cost of the apparatus can be realized. Since being compact, an UV-LED used as an ultraviolet source can be installed in the inkjet recording apparatus.

### 4.3. TRANSPORT STEP

The recording method of this embodiment may also include a transport step. In the transport step, the recording medium is transported in a predetermined direction in the recording apparatus. In more particular, by using a transport roller and/or a transport belt provided in the recording apparatus, the recording medium is transported from a paper supply portion to a paper discharge portion of the recording apparatus. In this transport process, the clear ink composition ejected from the ink jet head is adhered to the recording medium, so that a recoded matter is formed. The order and the timing to perform the ink adhesion step, the irradiation step, and the transport step are not particularly limited, and for example, the three steps described above may be performed simultaneously or alternately. In addition, two of the three steps may be simultaneously performed, and the remaining step may be performed separately.

## 5. RECORDING APPARATUS

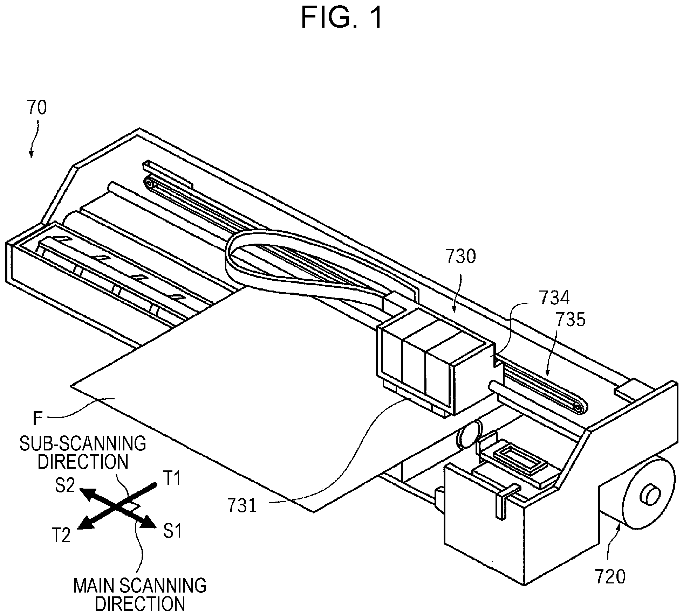

As one example of an ink jet apparatus, a perspective view of a serial printer is shown in FIG. 1. As shown in FIG. 1, a serial printer 70 includes a transport portion 720 and a recording portion 730. The transport portion 720 transports a recording medium F supplied to the serial printer to the recording portion 730, and after recording is performed on the recording medium, the transport portion 720 discharges the recording medium out of the serial printer. In particular, the transport portion 720 has feed rollers to transport the recording medium F thus transported in a sub-scanning direction T2.

In addition, the recording portion 730 has a carriage 734 mounting an inkjet head 731 which has nozzles to eject the clear ink composition to the recording medium F transported from the transport portion 720 and a carriage transfer mechanism 735 which transfers the carriage 734 in main scanning directions S1 and S2 of the recording medium F.

In the case of the serial printer, a head having a length smaller than the width of the recording medium is provided as the ink jet head 731, and when the head is transferred, recording is performed by a plurality of passes. In addition, in the serial printer, since the head 731 is mounted on the carriage 734 to be transferred in a predetermined direction, and the head is transferred in conjunction with the transfer of the carriage, the clear ink composition is ejected on the recording medium F. Accordingly, the recording is performed by at least two passes. In addition, the pass is also called a main scanning. Between the passes, a sub-scanning to transport the recording medium is performed. That is, the main scanning and the sub-scanning are alternately performed.

In addition, the ink jet apparatus of this embodiment is not limited to the serial type printer described above and may also be the line type printer described above. The line type printer has a line head used as the ink jet head having a length not less than the recording width of the recording medium and a transfer mechanism to relatively transfer the recording medium and the ink jet head in a direction orthogonal to the width direction of the recording medium and is a printer to perform recording on the recording medium by one scanning.

## EXAMPLES

Hereinafter, the present disclosure will be described in more detail with reference to Examples and Comparative Examples. The present disclosure is not limited at all to the following Examples. In addition, unless otherwise particularly noted, Examples and Comparative Examples were performed at room temperature (25°C) and 1 atmospheric pressure.

## 1. PREPARATION OF INK JET CLEAR INK COMPOSITION

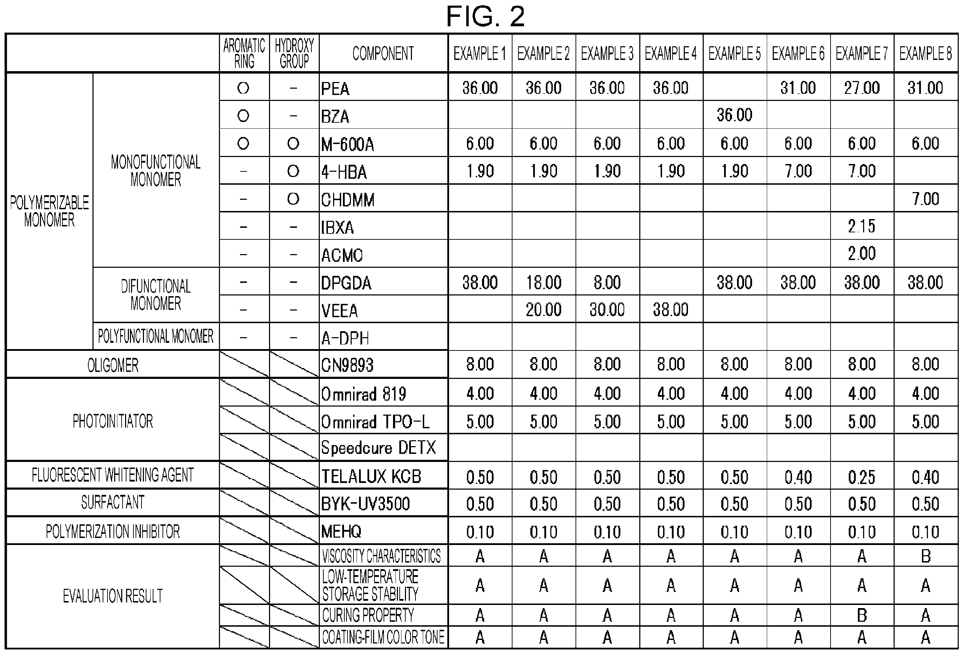

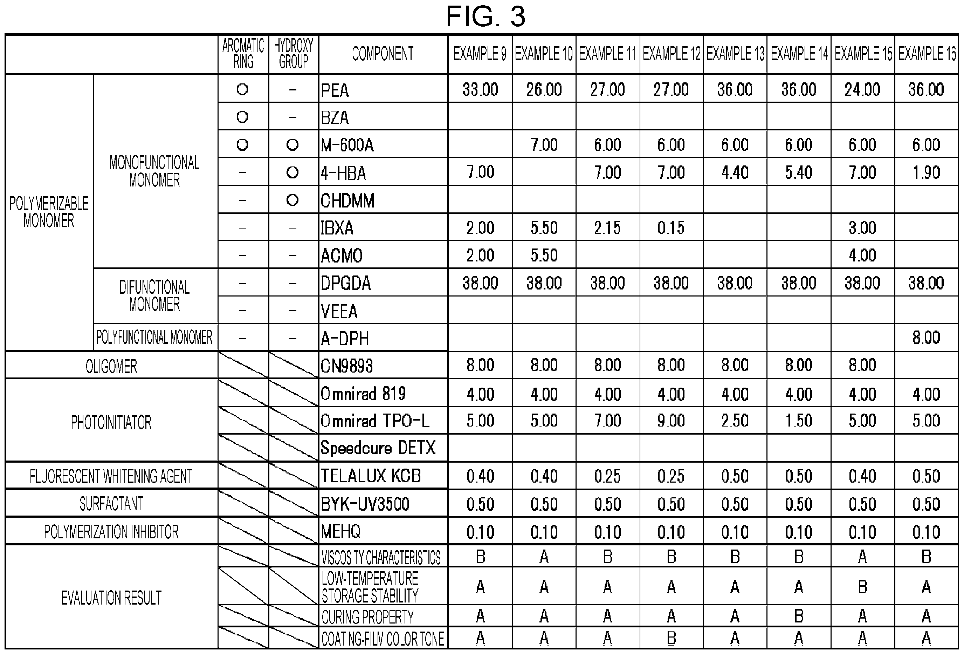

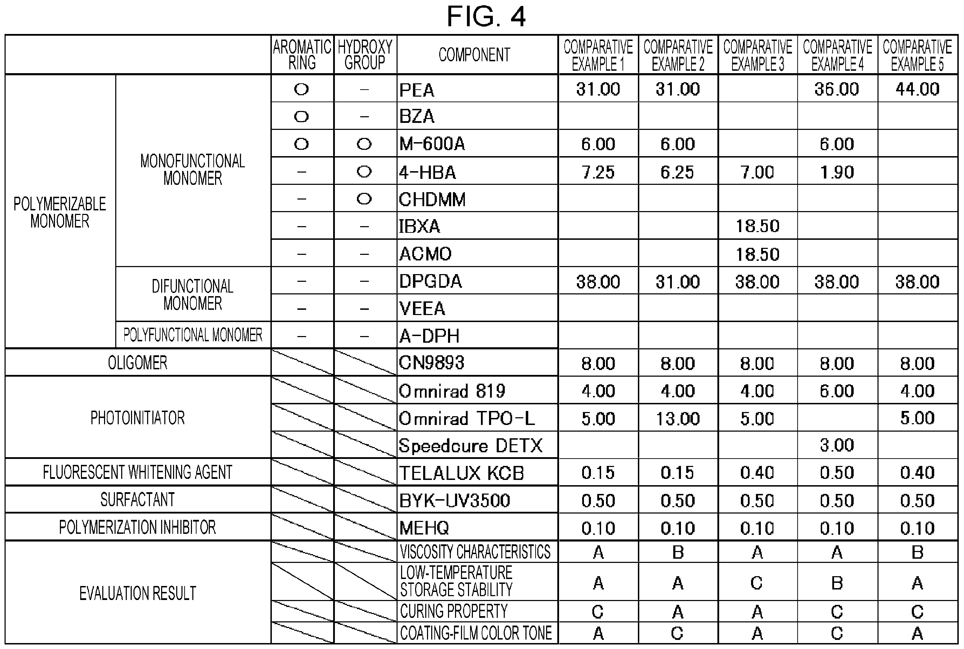

In order to form the compositions shown in FIGs. 2 to 4, components were charged in a mixing tank which was a stainless steel-made container and then filtrated using a membrane filter having a pore size of 5 $\mu$m, so that the ink jet clear ink compositions of Examples and Comparative Examples were obtained. In addition, unless otherwise particularly noted, the numerical value of the component of each Example shown in the figure represents "percent by mass".

The abbreviations and the components of the products shown in FIGs. 2 to 4 are as described below. In addition, in FIGs. 2 to 4, the blank column indicates that no component was used.

- PEA (trade name "Viscoat #192", manufactured by Osaka Organic Chemical Industry Ltd., phenoxyethyl acrylate)
- BZA (trade name "Viscoat #160", manufactured by Osaka Organic Chemical Industry Ltd., benzyl acrylate)
- M-600A (trade name "Epoxy Ester M-600A", manufactured by Kyoeisha Chemical Co., Ltd., 2-hydroxy-3-phenoxypropyl (meth)acrylate)
- 4-HBA (manufactured by Osaka Organic Chemical Industry Ltd., 4-hydroxybutyl acrylate)
- CHDMM (trade name "CHDMMA", manufactured by Mitsubishi chemical Co., Ltd., 1,4-cyclohexane dimethanol monoacrylate)
- IBXA ( manufactured by Osaka Organic Chemical Industry Ltd., isobornyl acrylate)
- ACMO (manufactured by KJ Chemicals Corporation, acryloyl morpholine)
- DPGDA (trade name "Viscoat #310HP", manufactured by Osaka Organic Chemical Industry Ltd., tripropylene glycol diacrylate)
- VEEA (manufactured by Nippon Shokubai Co., Ltd., 2-(2-vinyloxyethoxy)ethyl acrylate)
- A-DPH (manufactured by Shin-Nakamura Chemical Co., Ltd., dipentaerythritol hexaacrylate)
- CN9893 (manufactured by Sartomer Company, difunctional urethane acrylate oligomer)
- Omnirad 819 (manufactured by IGM Resins B.V., phenyl bis(2,4,6-trimethylbenzoyl)phosphine oxide)
- Omnirad TPO-L (manufactured by IGM Resins B.V., ethyl phenyl(2,4,6-trimethylbenzoyl)phosphinate)
- Speedcure DETX (manufactured by Sartomer Company, 2-methyl-[4-(methylthio)phenyl]-2-morpholino-1-propane)
- TELALUX KCB (manufactured by Clariant Japan, 1,4-bis(2-benzoxazolyl)naphthalene)
- BYK-UV3500 (manufactured by BYK Additives & Instruments, polyether modified polydimethylsiloxane having acryloyl group)
- MEHQ (trade name "p-methoxyphenol", manufactured by Kanto Chemical Co., Inc., hydroquinone monomethyl ether)

## 2. EVALUATION METHOD

### 2.1. VISCOSITY CHARACTERISTICS

By using a rotatory viscometer (product name "Rheometer MCR-301", manufactured by Anton Paar), the viscosity of the clear ink composition of each of Examples and Comparative Examples immediately after the preparation was measured at room temperature (25°C) in accordance with JIS Z 8803.

Evaluation Criteria

A: Viscosity is 19 to 21 mPa·s.
B: Viscosity is more than 18 to less than 19 mPa·s or more than 21 to less than 22 mPa·s.
C: Viscosity is 18 mPa·s or less or 22 mPa·s or more.

### 2.2. LOW-TEMPERATURE STORAGE STABILITY

After the clear ink composition of each of Examples and Comparative Examples was filled in a glass bottle and then stored at -20°C for 7 days. The states of the clear ink composition before and after the storage were observed by visual inspection for evaluation.

Evaluation Criteria

A: No generation of foreign substances is observed.
B: Although no generation of foreign substances is observed by visual inspection, by filtration using 10-$\mu$m filter, generation of foreign substances is observed.
C: Generation of foreign substances is observed by visual inspection.

### 2.3. CURING PROPERTY

A cotton swab-rubbing tackiness evaluation was performed. In particular, after the clear ink composition of each of Examples and Comparative Examples was applied using a bar coater to a poly(vinyl chloride) medium to have a coating thickness of 10 $\mu$m, a coating film thus formed was irradiated with ultraviolet rays at a predetermined irradiation intensity and a rate of 0.04 sec/cm. In the case described above, as a light source, an LED having a peak wavelength of 395 nm was used. In addition, the surface of the coating film was rubbed with a cotton swab, and irradiation energy at which the cotton swab was not colored was measured so as to evaluate the curing property.

Evaluation Criteria

A: Irradiation energy at which cotton swab is not colored is less than 150 mJ/cm$^2$.
B: Irradiation energy at which cotton swab is not colored is 150 to less than 250 mJ/cm$^2$.
C: Irradiation energy at which cotton swab is not colored is 250 mJ/cm$^2$ or more.

### 2.4. COLOR TONE EVALUATION OF COATING FILM

By using a colorimeter "Spectrolino" manufactured by GretagMacbeth, colorimetry was performed to measure b* on the coating film of the clear ink composition which was irradiated with ultraviolet rays for the evaluation of the curing property.

Evaluation Criteria

A:

$$b* < 1.0$$

B:

$$1.0 \leq b* < 2.0$$

C:

$$2.0 \leq b*$$

## 3. EVALUATION RESULTS

From the evaluation results shown in FIGs. 2 to 4, it was found that compared to the clear ink compositions of Comparative Examples, in all the clear ink compositions of Examples, the low-temperature storage stability, the curing property, and/or the color tone of the coating film are superior.

## Claims

1. An ink jet clear ink composition comprising:

a photoinitiator;
a fluorescent whitening agent; and
a polymerizable monomer,
wherein the photoinitiator includes ethyl phenyl(2,4,6-trimethylbenzoyl)phosphinate,
the polymerizable monomer includes an aromatic ring-containing monomer and a hydroxy group-containing monomer, and

the fluorescent whitening agent is present at a content of 0.2 percent by mass or more with respect to a total mass of the ink jet clear ink composition.

2. The ink jet clear ink composition according to claim 1, wherein the photoinitiator is present at a content of 0 to 12.0 percent by mass or less with respect to the total mass of the ink jet clear ink composition.

3. The ink jet clear ink composition according to claim 1, wherein the ethyl phenyl(2,4,6-trimethylbenzoyl) phosphinate is present at a content of 2.0 to 8.0 percent by mass with respect to the total mass of the ink jet clear ink composition.

4. The ink jet clear ink composition according to claim 1, wherein the hydroxy group-containing monomer includes at least one selected from the group consisting of 2-hydroxy-3-phenoxypropyl acrylate, 4-hydroxybutyl acrylate, and 1,4-cyclohexane dimethanol monoacrylate.

5. The ink jet clear ink composition according to claim 1, wherein the polymerizable monomer includes a monomer having both an aromatic ring and a hydroxy group.

6. The ink jet clear ink composition according to claim 5, wherein the monomer having both an aromatic ring and a hydroxy group includes 2-hydroxy-3-phenoxypropyl acrylate.

7. The ink jet clear ink composition according to claim 1, wherein the aromatic ring-containing monomer is present at a content of 31.5 percent by mass or more with respect to the total mass of the ink jet clear ink composition.

8. The ink jet clear ink composition according to claim 1, further comprising:
an urethane acrylate oligomer.

9. A recording method comprising:

an ejection step of ejecting the ink jet clear ink composition according to claim 1 so as to be adhered to a recording medium; and
an irradiation step of irradiating the ink jet clear ink composition with radioactive rays.

# FIG. 1

70

730

734
735

F

SUB-SCANNING
DIRECTION

S2          T1

T2          S1

731

MAIN SCANNING
DIRECTION

720

# FIG. 2

| POLYMERIZABLE MONOMER | | AROMATIC RING | HYDROXY GROUP | COMPONENT | EXAMPLE 1 | EXAMPLE 2 | EXAMPLE 3 | EXAMPLE 4 | EXAMPLE 5 | EXAMPLE 6 | EXAMPLE 7 | EXAMPLE 8 |
|---|---|---|---|---|---|---|---|---|---|---|---|---|
| POLYMERIZABLE MONOMER | MONOFUNCTIONAL MONOMER | O | – | PEA | 36.00 | 36.00 | 36.00 | 36.00 | | 31.00 | 27.00 | 31.00 |
| | | O | – | BZA | | | | | 36.00 | | | |
| | | O | O | M-600A | 6.00 | 6.00 | 6.00 | 6.00 | 6.00 | 6.00 | 6.00 | 6.00 |
| | | – | O | 4-HBA | 1.90 | 1.90 | 1.90 | 1.90 | 1.90 | 7.00 | 7.00 | |
| | | – | O | CHDMM | | | | | | | | 7.00 |
| | | – | – | IBXA | | | | | | | 2.15 | |
| | | – | – | ACMO | | | | | | | 2.00 | |
| | DIFUNCTIONAL MONOMER | – | – | DPGDA | 38.00 | 18.00 | 8.00 | | 38.00 | 38.00 | 38.00 | 38.00 |
| | | – | – | VEEA | | 20.00 | 30.00 | 38.00 | | | | |
| | POLYFUNCTIONAL MONOMER | – | – | A-DPH | | | | | | | | |
| OLIGOMER | | | | CN9893 | 8.00 | 8.00 | 8.00 | 8.00 | 8.00 | 8.00 | 8.00 | 8.00 |
| PHOTOINITIATOR | | | | Omnirad 819 | 4.00 | 4.00 | 4.00 | 4.00 | 4.00 | 4.00 | 4.00 | 4.00 |
| | | | | Omnirad TPO-L | 5.00 | 5.00 | 5.00 | 5.00 | 5.00 | 5.00 | 5.00 | 5.00 |
| | | | | Speedcure DETX | | | | | | | | |
| FLUORESCENT WHITENING AGENT | | | | TELALUX KCB | 0.50 | 0.50 | 0.50 | 0.50 | 0.50 | 0.40 | 0.25 | 0.40 |
| SURFACTANT | | | | BYK-UV3500 | 0.50 | 0.50 | 0.50 | 0.50 | 0.50 | 0.50 | 0.50 | 0.50 |
| POLYMERIZATION INHIBITOR | | | | MEHQ | 0.10 | 0.10 | 0.10 | 0.10 | 0.10 | 0.10 | 0.10 | 0.10 |
| EVALUATION RESULT | | | | VISCOSITY CHARACTERISTICS | A | A | A | A | A | A | A | B |
| | | | | LOW-TEMPERATURE STORAGE STABILITY | A | A | A | A | A | A | A | A |
| | | | | CURING PROPERTY | A | A | A | A | A | A | B | A |
| | | | | COATING-FILM COLOR TONE | A | A | A | A | A | A | A | A |

EP 4 481 008 A1

## FIG. 3

| | | AROMATIC RING | HYDROXY GROUP | COMPONENT | EXAMPLE 9 | EXAMPLE 10 | EXAMPLE 11 | EXAMPLE 12 | EXAMPLE 13 | EXAMPLE 14 | EXAMPLE 15 | EXAMPLE 16 |
|---|---|---|---|---|---|---|---|---|---|---|---|---|
| POLYMERIZABLE MONOMER | MONOFUNCTIONAL MONOMER | O | – | PEA | 33.00 | 26.00 | 27.00 | 27.00 | 36.00 | 36.00 | 24.00 | 36.00 |
| | | O | – | BZA | | | | | | | | |
| | | O | O | M-600A | | 7.00 | 6.00 | 6.00 | 6.00 | 6.00 | 6.00 | 6.00 |
| | | – | O | 4-HBA | 7.00 | | 7.00 | 7.00 | 4.40 | 5.40 | 7.00 | 1.90 |
| | | – | O | CHDMM | | | | | | | | |
| | | – | – | IBXA | 2.00 | 5.50 | 2.15 | 0.15 | | | 3.00 | |
| | | – | – | ACMO | 2.00 | 5.50 | | | | | 4.00 | |
| | DIFUNCTIONAL MONOMER | – | – | DPGDA | 38.00 | 38.00 | 38.00 | 38.00 | 38.00 | 38.00 | 38.00 | 38.00 |
| | | – | – | VEEA | | | | | | | | |
| | POLYFUNCTIONAL MONOMER | – | – | A-DPH | | | | | | | | 8.00 |
| OLIGOMER | | | | CN9893 | 8.00 | 8.00 | 8.00 | 8.00 | 8.00 | 8.00 | 8.00 | |
| PHOTOINITIATOR | | | | Omnirad 819 | 4.00 | 4.00 | 4.00 | 4.00 | 4.00 | 4.00 | 4.00 | 4.00 |
| | | | | Omnirad TPO-L | 5.00 | 5.00 | 7.00 | 9.00 | 2.50 | 1.50 | 5.00 | 5.00 |
| | | | | Speedcure DETX | | | | | | | | |
| FLUORESCENT WHITENING AGENT | | | | TELALUX KCB | 0.40 | 0.40 | 0.25 | 0.25 | 0.50 | 0.50 | 0.40 | 0.50 |
| SURFACTANT | | | | BYK-UV3500 | 0.50 | 0.50 | 0.50 | 0.50 | 0.50 | 0.50 | 0.50 | 0.50 |
| POLYMERIZATION INHIBITOR | | | | MEHQ | 0.10 | 0.10 | 0.10 | 0.10 | 0.10 | 0.10 | 0.10 | 0.10 |
| EVALUATION RESULT | | | | VISCOSITY CHARACTERISTICS | B | A | B | B | B | B | A | B |
| | | | | LOW-TEMPERATURE STORAGE STABILITY | A | A | A | A | A | A | B | A |
| | | | | CURING PROPERTY | A | A | A | A | A | B | A | A |
| | | | | COATING-FILM COLOR TONE | A | A | A | B | A | A | A | A |

EP 4 481 008 A1

## FIG. 4

| POLYMERIZABLE MONOMER | | AROMATIC RING | HYDROXY GROUP | COMPONENT | COMPARATIVE EXAMPLE 1 | COMPARATIVE EXAMPLE 2 | COMPARATIVE EXAMPLE 3 | COMPARATIVE EXAMPLE 4 | COMPARATIVE EXAMPLE 5 |
|---|---|---|---|---|---|---|---|---|---|
| POLYMERIZABLE MONOMER | MONOFUNCTIONAL MONOMER | O | – | PEA | 31.00 | 31.00 | | 36.00 | 44.00 |
| | | O | – | BZA | | | | | |
| | | O | O | M-600A | 6.00 | 6.00 | | 6.00 | |
| | | – | O | 4-HBA | 7.25 | 6.25 | 7.00 | 1.90 | |
| | | – | O | CHDMM | | | | | |
| | | – | – | IBXA | | | 18.50 | | |
| | | – | – | ACMO | | | 18.50 | | |
| | DIFUNCTIONAL MONOMER | – | – | DPGDA | 38.00 | 31.00 | 38.00 | 38.00 | 38.00 |
| | | – | – | VEEA | | | | | |
| | POLYFUNCTIONAL MONOMER | – | – | A-DPH | | | | | |
| OLIGOMER | | | | CN9893 | 8.00 | 8.00 | 8.00 | 8.00 | 8.00 |
| PHOTOINITIATOR | | | | Omnirad 819 | 4.00 | 4.00 | 4.00 | 6.00 | 4.00 |
| | | | | Omnirad TPO-L | 5.00 | 13.00 | 5.00 | | 5.00 |
| | | | | Speedcure DETX | | | | 3.00 | |
| FLUORESCENT WHITENING AGENT | | | | TELALUX KCB | 0.15 | 0.15 | 0.40 | 0.50 | 0.40 |
| SURFACTANT | | | | BYK-UV3500 | 0.50 | 0.50 | 0.50 | 0.50 | 0.50 |
| POLYMERIZATION INHIBITOR | | | | MEHQ | 0.10 | 0.10 | 0.10 | 0.10 | 0.10 |
| EVALUATION RESULT | | | | VISCOSITY CHARACTERISTICS | A | B | A | A | B |
| | | | | LOW-TEMPERATURE STORAGE STABILITY | A | A | C | B | A |
| | | | | CURING PROPERTY | C | A | A | C | C |
| | | | | COATING-FILM COLOR TONE | A | C | A | C | A |

EP 4 481 008 A1

Europäisches
Patentamt

European
Patent Office

Office européen
des brevets

# EUROPEAN SEARCH REPORT

**Application Number**

EP 24 18 3611

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/077371 A1 (KOBAYASHI MASAHIDE [JP]) 16 March 2023 (2023-03-16) * examples 6,17,24 * ----- | 1-9 | INV. C09D11/101 C09D11/38 |
| X | US 2012/029108 A1 (NAKANE HIROKI [JP] ET AL) 2 February 2012 (2012-02-02) * claims; examples * ----- | 1-9 | |
| X,D | EP 2 644 665 A1 (SEIKO EPSON CORP [JP]) 2 October 2013 (2013-10-02) * claims; examples * ----- | 1-9 | |

TECHNICAL FIELDS
SEARCHED     (IPC)

C09D

The present search report has been drawn up for all claims

| Place of search | Date of completion of the search | Examiner |
|---|---|---|
| Munich | 29 October 2024 | Schmitz, Volker |

EPO FORM 1503 03.82 (P04C01)

**EP 4 481 008 A1**

## ANNEX TO THE EUROPEAN SEARCH REPORT
## ON EUROPEAN PATENT APPLICATION NO.

EP 24 18 3611

This annex lists the patent family members relating to the patent documents cited in the above-mentioned European search report.
The members are as contained in the European Patent Office EDP file on
The European Patent Office is in no way liable for these particulars which are merely given for the purpose of information.

29-10-2024

| Patent document cited in search report | | Publication date | Patent family member(s) | | Publication date |
|---|---|---|---|---|---|
| US 2023077371 | A1 | 16-03-2023 | JP | 2023036417 A | 14-03-2023 |
| | | | US | 2023077371 A1 | 16-03-2023 |
| US 2012029108 | A1 | 02-02-2012 | JP | 5685849 B2 | 18-03-2015 |
| | | | JP | 2012031254 A | 16-02-2012 |
| | | | US | 2012029108 A1 | 02-02-2012 |
| | | | US | 2014118451 A1 | 01-05-2014 |
| EP 2644665 | A1 | 02-10-2013 | CN | 103360866 A | 23-10-2013 |
| | | | EP | 2644665 A1 | 02-10-2013 |
| | | | JP | 6024150 B2 | 09-11-2016 |
| | | | JP | 2013203873 A | 07-10-2013 |
| | | | US | 2013258015 A1 | 03-10-2013 |

EPO FORM P0459

For more details about this annex : see Official Journal of the European Patent Office, No. 12/82

**19**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023103177 A
- JP 2013203873 A